# EUROPEAN PATENT SPECIFICATION

(11) **EP 4 184 919 B1**
(45) Date of publication and mention of the grant of the patent: **11.11.2026**
(21) Application number: 21855545.6
(22) Date of filing: 11.08.2021
(51) Int. Cl.: H04N 21/2187, H04N 21/4788, H04N 21/431, H04N 21/44

(54) **METHOD, APPARATUS AND SYSTEM FOR CONTROLLING INTERACTIVE LIVE STREAMING CO-HOSTING, DEVICE, AND MEDIUM**
VERFAHREN, VORRICHTUNG UND SYSTEM ZUR STEUERUNG VON INTERAKTIVEM LIVE-STREAMING-CO-HOSTING, VORRICHTUNG UND MEDIUM
PROCÉDÉ, APPAREIL ET SYSTÈME DE COMMANDE DE CO-HÉBERGEMENT DE DIFFUSION EN CONTINU EN DIRECT INTERACTIVE, DISPOSITIF ET SUPPORT

(30) Priority: 14.08.2020 CN 202010821116
(43) Date of publication of application: 24.05.2023
(73) Proprietor: BEIJING BYTEDANCE NETWORK TECHNOLOGY CO., LTD., Beijing 100041 (CN)
(72) Inventor: WANG, Wanhong, Beijing 100190 (CN); WANG, Yalou, Beijing 100190 (CN); HUANG, Jiahuan, Beijing 100190 (CN); ZHU, Yong, Beijing 100190 (CN); LI, Yaxin, Beijing 100190 (CN); CHE, Xin, Beijing 100190 (CN); LIU, Jiacheng, Beijing 100190 (CN); ZHANG, Zihao, Beijing 100190 (CN); WANG, Yuanyuan, Beijing 100190 (CN); QU, Zheqi, Beijing 100190 (CN); XU, Weihao, Beijing 100190 (CN); CHEN, Jianping, Beijing 100190 (CN)
(74) Representative: Marks & Clerk LLP
(86) International application number: PCT/CN2021/111925
(87) International publication number: WO 2022/033494

(56) References cited:
- WO-A1-2017/219347
- CN-A- 108 390 816
- CN-A- 108 965 769
- CN-A- 109 068 181
- CN-A- 109 068 181
- CN-A- 110 755 845
- CN-A- 111 385 592
- CN-A- 111 970 524
- CN-B- 107 680 157
- US-A1- 2016 065 880
- US-A1- 2018 133 603
- US-A1- 2018 139 252

## Description

### TECHNICAL FIELD

The present disclosure relates to the field of computer data processing technology, for example, a method and system for controlling interactive live streaming co-hosting, a device, and a medium.

### BACKGROUND

Network live streaming is widely accepted and applied, and the application of live streaming co-hosting adds more interest to the network live streaming.

During live streaming co-hosting, to ensure that the host in a live streaming room is on the same side from the audience perspective, the video streams of two host terminals may be directly exchanged and displayed on an audience terminal. However, for interactive live streaming co-hosting, the preceding method for directly exchanging the positions of the video streams may lead to image confusion. As a result, the interactive live streaming co-hosting cannot be implemented.

CN 109068181 A relates to a football game interactive method. US 2018/139252 A1 discloses a network call method.

### SUMMARY

The present disclosure provides a method and system for controlling interactive live streaming co-hosting, a device, and a medium to form a display image satisfying an interactive live streaming co-hosting scenario, thereby avoiding image confusion.

The present disclosure is set out in the appended set of claims.

### BRIEF DESCRIPTION OF DRAWINGS

FIG. 1 is a flowchart of a method for controlling interactive live streaming co-hosting according to embodiment one of the present disclosure;
FIG. 2A is a diagram of a display region of live streaming co-hosting displayed by a first terminal according to embodiment one of the present disclosure;
FIG. 2B is a diagram of a display region of live streaming co-hosting displayed by a second terminal according to embodiment one of the present disclosure;
FIG. 2C is a diagram of an interactive scenario according to embodiment one of the present disclosure;
FIG. 2D is a diagram of another display region of live streaming co-hosting according to embodiment one of the present disclosure;
FIG. 3 is a flowchart of a method for controlling interactive live streaming co-hosting according to embodiment two of the present disclosure;
FIG. 4 is a diagram of a live streaming flow according to embodiment two of the present disclosure;
FIG. 5 is a flowchart of a method for controlling interactive live streaming co-hosting according to example three;
FIG. 6 is a diagram illustrating the structure of an apparatus for controlling interactive live streaming co-hosting according to example five;
FIG. 7 is a diagram illustrating the structure of an apparatus for controlling interactive live streaming co-hosting according to example six;
FIG. 8 is a diagram illustrating the structure of a system for controlling interactive live streaming co-hosting according to embodiment seven of the present disclosure;
FIG. 9 is a diagram illustrating the structure of another system for controlling interactive live streaming co-hosting according to embodiment seven of the present disclosure; and
FIG. 10 is a diagram illustrating the structure of an electronic device according to embodiment eight of the present disclosure.

### DETAILED DESCRIPTION

Embodiments of the present disclosure are described below with reference to the drawings. The drawings illustrate some embodiments of the present disclosure, but it should be understood that the present disclosure may be implemented in various manners and should not be limited to the embodiments set forth herein.

The various steps recited in method embodiments of the present disclosure may be performed in a different order and/or in parallel. In addition, the method embodiments may include additional steps and/or omit execution of illustrated steps. The scope of the present disclosure is not limited in this respect.

As used herein, the term "include" and variations thereof are intended to be inclusive, that is, "including, but not limited to". The term "based on" is "at least partially based on". The term "one embodiment" means "at least one embodiment"; the term "another embodiment" means "at least one another embodiment"; and the term "some embodiments" means "at least some embodiments". Related definitions of other terms are given in the description hereinafter.

Concepts such as "first" and "second" in the present disclosure are merely intended to distinguish one from another apparatus, module or unit and are not intended to limit the order or interrelationship of the functions performed by the apparatus, module or unit.

"One" and "a plurality" mentioned in the present disclosure are illustrative, are not intended to limit the present disclosure, and should be understood as "one or more" unless expressed in the context.

### Embodiment one

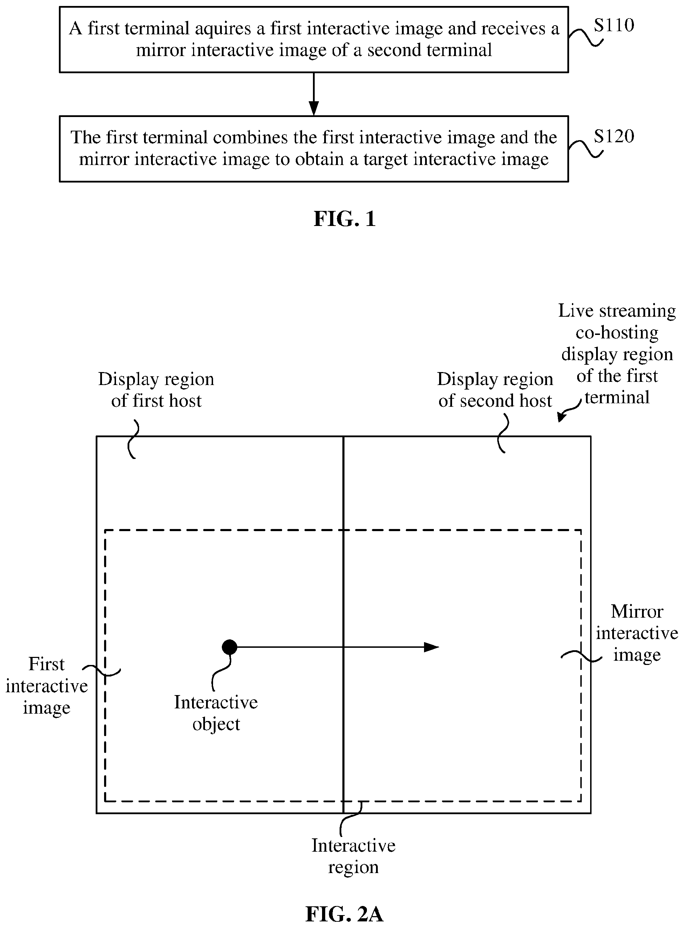

FIG. 1 is a flowchart of a method for controlling interactive live streaming co-hosting according to embodiment one of the present disclosure. This embodiment of the present disclosure is applied to the case where a live streaming interactive image is formed in the application scenario of interactive live streaming co-hosting. This method may be executed by an apparatus for controlling interactive live streaming co-hosting. The apparatus may be implemented in the form of software and/or hardware. The apparatus may be implemented by an electronic device. The electronic device may be a mobile terminal or a personal computer (PC) terminal.

As shown in FIG. 1, the method in this embodiment includes the steps below.

In S110, a first terminal acquires a first interactive image and receives a mirror interactive image of a second terminal.

In S120, the first terminal combines the first interactive image and the mirror interactive image to obtain a target interactive image.

The first terminal and the second terminal perform the live streaming co-hosting. The first terminal and the second terminal may be mobile terminals such as mobile phones or tablet computers, or may be electronic devices such as PC terminals. The first terminal or the second terminal may send a co-hosting request to a live streaming server, where the co-hosting request may include identifier information of the first terminal and the second terminal. The live streaming server performs co-hosting matching according to the co-hosting request to implement the live streaming co-hosting between the first terminal and the second terminal.

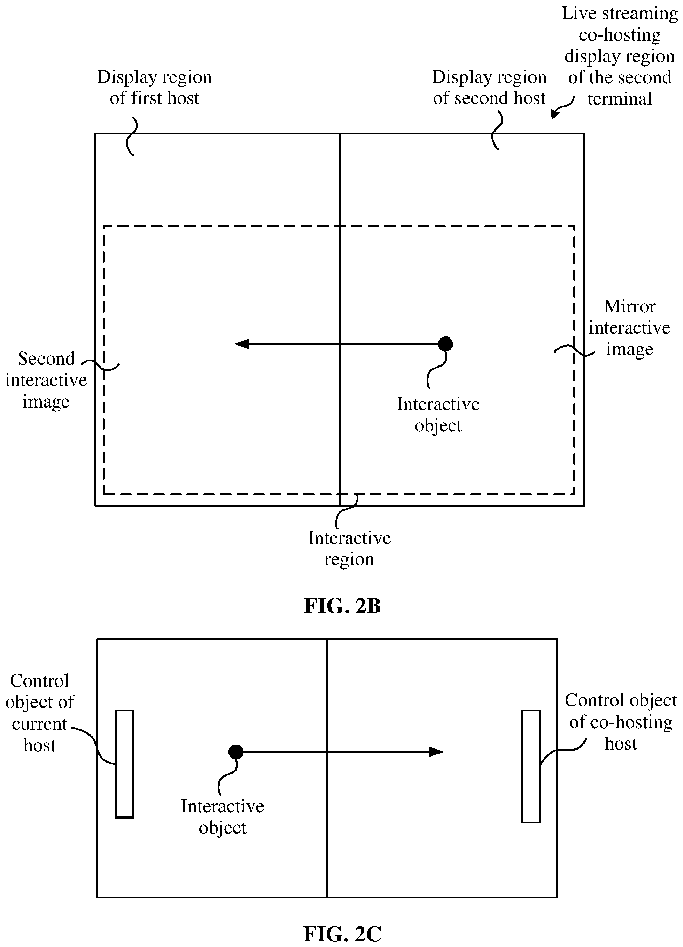

In this embodiment, the first terminal and the second terminal interact in the same interactive region of a display interface based on an interactive object. Exemplarily, referring to FIGS. 2A and 2B, FIG. 2A is a diagram of a display region of live streaming co-hosting displayed by the first terminal according to embodiment one of the present disclosure, and FIG. 2B is a diagram of a display region of live streaming co-hosting displayed by the second terminal according to embodiment one of the present disclosure. The display region may include the display region of a first host, the display region of a second host, and the interactive region (dotted region). The interactive region in FIG. 2A or FIG. 2B is only an example, and the interactive region may completely overlap, partially overlap, or completely not overlap with the display region of the first host and the display region of the second host, which is not limited to this embodiment. The size of the interactive region is less than or equal to the size of the overall display region.

The display region of the first host is configured to display the image or video of the first host acquired by the first terminal through a camera. The display region of the second host is configured to display the image or video of the second host acquired by the second terminal through a camera. The interactive region is configured to display the interactive image of the first terminal and the second terminal. At least one interactive object is included in the interactive image, for example, one interactive object is included in FIG. 2A and FIG. 2B and moves along the arrow direction. The interactive object is not limited to the spherical object shown in FIG. 2A and FIG. 2B and may change in real time according to an interactive scenario.

The movement manner of the interactive object may also be determined according to the interactive scenario. The movement direction of the interactive object is not limited to the movement directions shown in FIG. 2A and FIG. 2B.

In an embodiment, the interactive scenario may also include a control object, that is, an object that may be controlled by a control instruction input by a host. In some embodiments, the control object may be different from the interactive object, and the control object of the first terminal and the control object of the second terminal may be different, that is, the first terminal and the second terminal correspond to different control objects separately. For example, referring to FIG. 2C, FIG. 2C is a diagram of an interactive scenario according to embodiment one of the present disclosure. In FIG. 2C, each of the first terminal and the second terminal corresponds to one control object, and the corresponding control object may be controlled to change the position, speed, direction, and shape. An interactive object different from the control object is included in FIG. 2C and moves in the interactive scenario. In some embodiments, the control object may be one or more of the interactive objects, that is, the first terminal or the second terminal may control one or more of the interactive objects so that the one or more interactive objects are controlled to change the position, speed, direction, and shape.

As can be seen from FIGS. 2A and 2B, the position of the display region of the first host in the display region of the first terminal is the same as the position of the display region of the second host in the display region of the second terminal. That is, in any terminal, the display region of the operation user of this terminal should be located at the same position, for example, on the left side of a co-hosting display region. Similarly, the interactive image displayed in the interactive region is also determined by the interactive images acquired by two terminals. The first terminal acquires the first interactive image, the second terminal acquires the second interactive image, the sum of the size of the first interactive image and the size of the second interactive image is the same as the size of the overall interactive image, and the size of the first interactive image may be the same as the size of the second interactive image. Exemplarily, referring to FIGS. 2A and 2B, in the display region of the first terminal, the boundary between the display region of the first host and the display region of the second host is used as a split line, the interactive image located in the display region of the first host is used as the first interactive image. Similarly, in the display region of the second terminal, the boundary between the display region of the first host and the display region of the second host is used as a split line, and the interactive image located in the display region of the second host is used as the second interactive image. Referring to FIG. 2C, in the interactive image displayed by any terminal, the control object corresponding to the current terminal is located on the same side, for example, on the left side of the interactive region. The interactive object moves in the interactive region, that is, the first interactive image and/or the second interactive image includes at least one interactive object. The interactive object moves in the first interactive image and the second interactive image.

To form a complete interactive image, the first terminal acquires the first interactive image, and the second terminal acquires the second interactive image. In an embodiment, the first terminal may acquire the first interactive image in the following manners: The first terminal identifies the control information in a video image of a first user, and controls the control object in the interactive scenario based on the control information; and the first interactive image corresponding to the interactive region of the first terminal is acquired by frame. The first terminal may be configured with a camera, and the camera is configured to acquire a video of the first host. The first terminal identifies control information in multiple frames of video images in the video to control the control object in the interactive scenario. Identification of the control information in the video images may be determined by identifying position information and/or posture information of keypoints of the first host. For example, these keypoints may be, but are not limited to, a finger, an arm, a head, etc. For example, the position information of the control object may be adjusted through the position information of the keypoints, and the direction or shape of the control object may be adjusted through the posture information of the keypoints. In some embodiments, the control information of the control object may be obtained by identifying the face coordinate, where the ordinate of the face coordinate corresponds to longitudinal control information of the control object, and the abscissa of the face coordinate corresponds to the lateral control information of the control object. The face coordinate may be the coordinate of the center point of the face or the coordinate of any specified organ.

According to the control information of the multiple frames of video images in the video of the first host, data of the control object in the interactive region corresponding to the first terminal is determined frame by frame. The first interactive image of a corresponding frame is formed based on the data of the control object and/or the data of the interactive object in the interactive region of the first terminal, the interactive region corresponding to the first terminal may be a part of the interactive region on the side where the display region of the first host is located, and the part of the interactive region may be half of the overall interactive region.

Similarly, the second terminal acquires the second interactive image based on the preceding manner. The second terminal sends the acquired second interactive image to the game server, and the game server performs the mirror processing on the received second interactive image to obtain the mirror interactive image and transmits the mirror interactive image to the first terminal. The game server may directly transmit the mirror interactive image to the first terminal or may transmit the mirror interactive image to the first terminal through realtime communication (RTC).

The first interactive image and the second interactive image respectively carry the timestamp of an acquisition time, and the mirror interactive image carries the timestamp accordingly. The timestamp of the mirror interactive image is the same as the timestamp of the second interactive image on which the mirror processing is performed.

The first terminal combines the first interactive image and the mirror interactive image that have the same timestamp to obtain the target interactive image of the first terminal. For example, the position of the first interactive image is unchanged, and the mirror interactive image and the first interactive image are aligned and spliced to form the target interactive image. The first interactive image and the mirror interactive image are combined through the timestamp, in this manner, synchronization of interactive images is ensured, and confusion of the interactive images is avoided. Multiple frames of target interactive images form a target interactive video displayed by the first terminal, the target interactive video is displayed in the live streaming co-hosting display interface of the first terminal, and the target interactive video is pushed to an audience terminal corresponding to the first terminal.

On the basis of the preceding embodiment, the first terminal sends the first interactive image to the game server so that the game server is caused to transmit the mirror interactive image of the first interactive image to the second terminal after performing the mirror processing on the first interactive image. The second terminal forms the target interactive image of the second terminal based on the acquired second interactive image and the mirror interactive image of the first interactive image. The second interactive image in the target interactive image of the second terminal is located on the left side of the interactive region, and the mirror interactive image of the first interactive image is located on the right side of the interactive region, so as to form a complete interactive image.

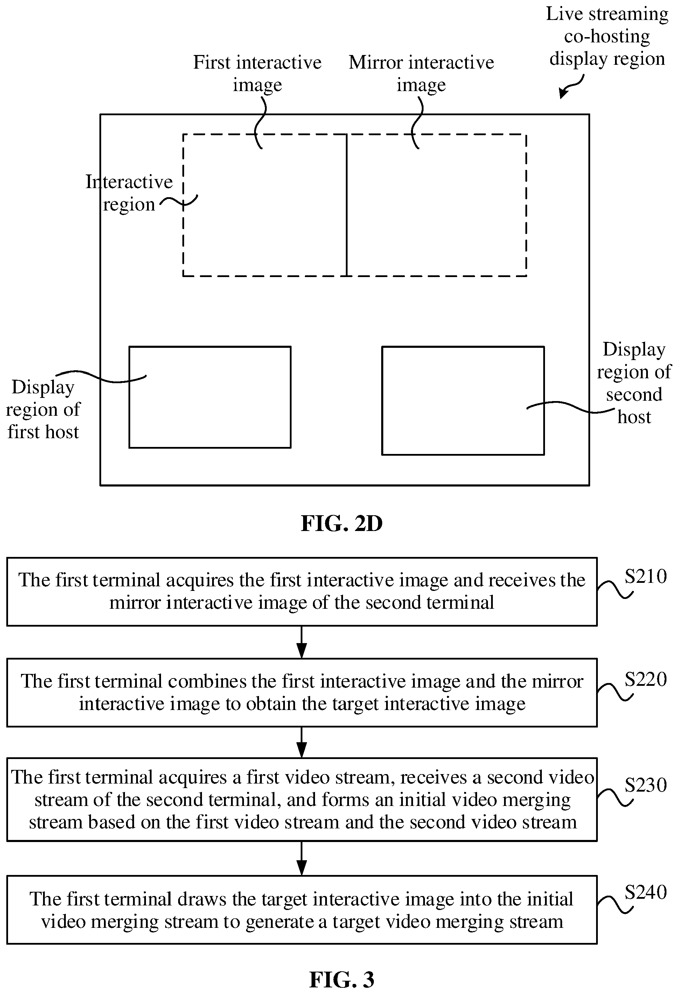

The layout of the display region displayed by the first terminal or the second terminal is not limited to the layout shown in FIG. 2A or FIG. 2B. Referring to FIG. 2D, FIG. 2D is a diagram of another display region of live streaming co-hosting according to embodiment one of the present disclosure. In FIG. 2D, the display region of the first host, the display region of the second host, and the interactive region do not overlap, the interactive region may include the interactive object and/or the control object, and the interactive object and/or the control object moves in two interactive images of the interactive region. The layout of the display region of the first host, the display region of the second host, and the interactive region in FIG. 2D may be adjusted according to design requirements, which is not limited in this embodiment.

In the technical schemes of this embodiment, the first terminal combines the acquired first interactive image with the received mirror interactive image of the second interactive image of the second terminal to obtain the target interactive image suitable for the first terminal to display. In this manner, the clarity and accuracy of the interactive images in the interactive region of different terminals are ensured in the live streaming scenario, and the confusion of the interactive images is avoided.

### Embodiment two

FIG. 3 is a flowchart of a method for controlling interactive live streaming co-hosting according to embodiment two of the present disclosure. This embodiment is described on the basis of the preceding embodiment. The method includes the steps below.

In S210, the first terminal acquires the first interactive image and receives the mirror interactive image of the second terminal. The first terminal is co-hosted with the second terminal. The second interactive image of the second terminal is mirrored to obtain the mirror interactive image of the second terminal.

In S220, the first terminal combines the first interactive image and the mirror interactive image to obtain the target interactive image.

In S230, the first terminal acquires a first video stream, receives a second video stream of the second terminal, and forms an initial video merging stream based on the first video stream and the second video stream.

In S240, the first terminal adds the target interactive image to the initial video merging stream to generate a target video merging stream. The target video merging stream is used to push to an audience terminal of the first terminal.

Each of the first terminal and the second terminal is configured with a camera. The first terminal acquires the first video stream through the first camera, and the first video stream may be a video stream including the first host. The second terminal acquires the second video stream through the second camera, and the second video stream may be a video stream including the second host. The second terminal transmits the second video stream to the first terminal, for example, the video stream may be transmitted through the realtime communication. For example, the first terminal sends the acquired first video stream to the realtime communication, the second terminal sends the acquired second video stream to the realtime communication, and the realtime communication transmits the first video stream to the second terminal and transmits the second video stream to the first terminal.

The first terminal performs stream merging processing on the first video stream and the second video stream to obtain the initial video merging stream. Based on the first video stream and the second video stream, the initial video merging stream is formed in the following manners: a stream merging position of the first video stream and a stream merging position of the second video stream are determined according to the identifier of the first video stream and the identifier of the second video stream; and the stream merging processing is performed on the first video stream and the second video stream according to the stream merging positions to form the initial video merging stream. Referring to FIG. 2A, the display region of the first host in FIG. 2A is the stream merging position of the first video stream, and the display region of the second host is the stream merging position of the second video stream. For any terminal, the stream merging position of the video stream acquired by the current terminal may be a first preset position located in the live streaming co-hosting display region of the current terminal, for example, may be a left side position. The stream merging position of the video stream acquired by a co-hosting terminal is located at a second preset position located in the live streaming co-hosting display region of the current terminal, for example, may be a right side position.

The first terminal performs the stream merging processing on the first video stream and the second video stream at corresponding stream merging positions according to the identifier of the first video stream and the identifier of the second video stream to obtain the initial video merging stream. In an embodiment, the stream merging processing may be performed on the first video stream and the second video stream according to the stream merging positions in the following manner: the stream merging processing is performed on a video frame of the first video stream and a video frame of the second video stream according to the stream merging positions based on timestamps of multiple video frames of the first video stream and timestamps of multiple video frames of the second video stream, where the video frame of the first video stream and the video frame of the second video stream have the same timestamp. The stream merging processing is performed on the first video stream and the second video stream based on the timestamps. In this manner, the live streaming delay of two video streams is avoided, and the synchronization of the video streams is improved.

The first terminal adds the target interactive image into multiple video frames corresponding to the initial video merging stream to obtain the target video merging stream of the first terminal. The target interactive image and multiple video frames in the initial video merging stream are each provided with the timestamp, and the target interactive image is added to a video frame having the same timestamp as the target interactive image.

In some embodiments, the target interactive image includes the data of the control object and/or the data of the interactive object. The control object and/or the interactive object are rendered into a corresponding video frame based on the data to complete the drawing of the target interactive image. In some embodiments, pixel values of multiple pixels in the target interactive image may be rendered in the corresponding video frame based on the position of the interactive region in the display interface, so as to complete the drawing of the target interactive image. When the interactive region overlaps with the display position of the first host and the display position of the second host, the image background of the target interactive image is transparent to avoid blocking of the image in the initial video merging stream. Accordingly, referring to FIGS. 2A and 2B, the size of the target interactive image is less than or equal to the size of each image frame in the initial video merging stream. When the interactive region does not overlap with the display position of the first host and the display position of the second host, the image background of the target interactive image may be configured according to requirements. Drawing of the target interactive image may be rendering of a display region corresponding to a video frame of the target interactive image and a display region corresponding to a video frame of the initial video merging stream respectively, where the two video frames have the same timestamp.

The target video merging stream is displayed on the first terminal, and the target video merging stream is pushed to the audience terminal corresponding to the first terminal. In this manner, it is ensured that in the live streaming images displayed on audience terminals, the host of the live streaming room is located at the same preset position for all audiences. Pushing the target video merging stream may be implemented based on a content delivery network (CDN) server.

In this embodiment, the first terminal and the second terminal are terminals having the local stream merging function. Instead of performing video stream merging by the live streaming server, the video stream merging is performed by the first terminal, so the delay of a video merging stream is reduced and the lag of a video stream is avoided.

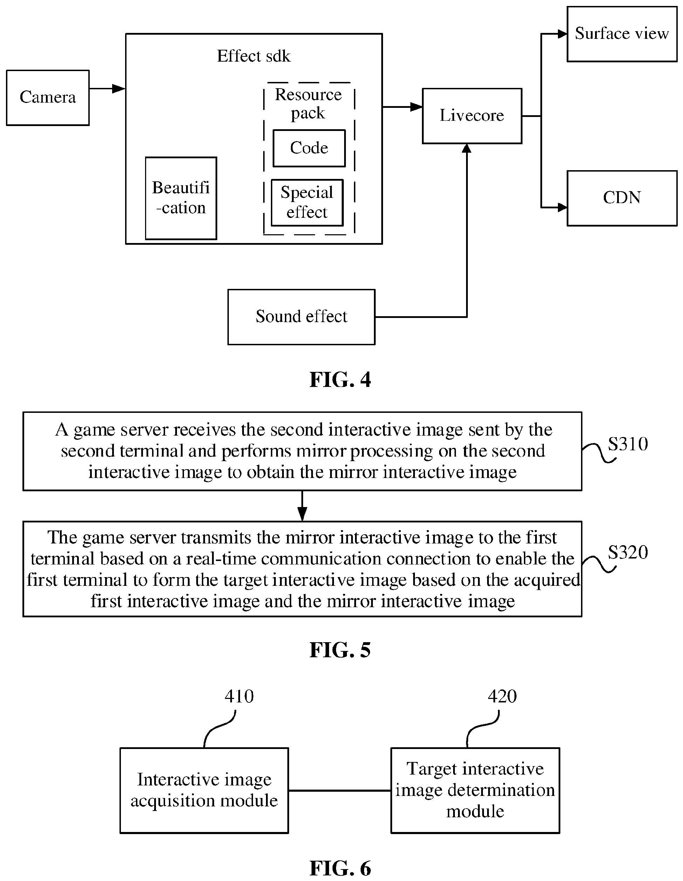

For example, referring to FIG. 4, FIG. 4 is a diagram of a live streaming flow according to embodiment two of the present disclosure. The camera acquires the first video stream and transmits the first video stream to an effect processing module (effect sdk). The effect processing module performs beautification processing and special effect processing on the acquired first video stream, receives the second video stream, and performs the stream merging processing on the first video stream and the second video stream to obtain the initial video merging stream. The effect processing module acquires the first interactive image and receives the mirror interactive image of the second interactive image, combines the first interactive image and the mirror interactive image, and then draws the obtained target interactive image into the initial video merging stream to obtain the target video merging stream, and the target video merging stream is transmitted to a livecore. At the same time, an audio stream is acquired by a sound-pick-up device of the first terminal, or a sound effect audio stream in the first terminal is invoked. The audio stream is transmitted to the livecore, and the livecore performs the stream merging processing on the video stream and the audio stream to push the merged video stream to an audience terminal through the CDN, so as to display the video stream on the first terminal based on a surface view.

Steps S210 to S220 and step S230 may be executed sequentially or may be executed synchronously. Alternatively, step S230 may be firstly executed, and then steps S210 to S220 are executed.

In the technical schemes of this embodiment, the first terminal acquires the first interactive image and the first video stream. The second terminal acquires the second interactive image and the second video stream. The first terminal receives the second video stream and the mirror interactive image of the second interactive image, splices the first interactive image and the mirror interactive image to obtain the target interactive image, performs the stream merging processing on the first video stream and the second video stream to obtain the initial video merging stream, and draws multiple frames of target interactive images into video frames corresponding to the initial video merging stream to obtain the target video merging stream. In this manner, the combination of a host video image and an interactive image in the live streaming co-hosting scenario is implemented, the accuracy of an interactive video merging stream is improved, and confusion of a merging stream is avoided.

On the basis of the preceding embodiments, the interactive scenario of the first terminal and the second terminal may be a game scenario, and the game server performs score addition/subtraction and victory/defeat determination in the game scenario. To ensure time synchronization in the game scenario, the first terminal receives the control signaling sent by the game server and adjusts the state of the interactive scenario in which the first terminal and the second terminal are located based on the control signaling. The control signaling is sent by the game server to the first terminal and the second terminal synchronously.

The same control signaling is sent by the game server to two co-hosted terminals synchronously, so that the first terminal and the second terminal synchronously execute the preceding control signaling, thereby improving the synchronization of the game scenario. The control signaling may include start signaling, end signaling, and state switch signaling. The start signaling is used to control the game scenario to be started. The end signaling is used to control the game scenario to be ended. The state switch signaling is used to perform state switching during the process of the game scenario. The type of the state switch signaling and the number of the state switch signaling may be configured according to different game scenarios.

The preceding control signaling is configured to synchronously control the first terminal and the second terminal at the start, the end, and in the process of the game scenario. In this manner, the synchronization of the scenario is implemented, and the interaction disorder caused by a delay is reduced.

The following example three to example six are outside the subject-matter of the claims but useful for understanding the present disclosure.

### Example three

FIG. 5 is a flowchart of a method for controlling interactive live streaming co-hosting according to example three. This example is applied to the case where a live streaming interactive image is formed in the application scenario of interactive live streaming co-hosting. This method may be executed by the apparatus for controlling interactive live streaming co-hosting. The apparatus may be implemented in the form of software and/or hardware. The apparatus may be implemented by the electronic device, and the electronic device may be a server.

In S310, the game server receives the second interactive image sent by the second terminal and mirrors the second interactive image to obtain the mirror interactive image.

In S320, the game server transmits the mirror interactive image to the first terminal based on a realtime communication to enable the first terminal to form the target interactive image based on the acquired first interactive image and the mirror interactive image.

In this example, for the first terminal, the game server mirrors the second interactive image sent by the second terminal to obtain the mirror interactive image and transmits the mirror interactive image to the first terminal, so that the first terminal is caused to form the target interactive image based on the first interactive image and the mirror interactive image. In this manner, there is no need to process the first interactive image in the preceding process, the correctness of the target interactive image is ensured, and the calculation amount of the game server is reduced at the same time.

Similarly, for the second terminal, the game server mirrors the first interactive image sent by the first terminal to obtain the mirror interactive image and transmits the mirror interactive image to the second terminal, so that the second terminal is caused to form the target interactive image based on the acquired second interactive image and the mirror interactive image, and there is no need to process the second interactive image in the preceding process.

In an embodiment, the second interactive image may be mirrored in the following manner: the second interactive image is mirrored by using the common edge of the second interactive image and the first interactive image as a mirror edge. For example, an edge in the second interactive image consistent with the center line of the interactive region may be used as the mirror edge. Thus, it is ensured that the mirror interactive image obtained after the mirror processing is correctly connected with the first interactive image, avoiding the confusion of the target interactive image. The second interactive image may be mirrored based on the mirror edge, multiple pixels in the second interactive image are correspondingly disposed at corresponding positions on the other side of the mirror edge. Exemplarily, when the mirror edge is a longitudinal edge, the ordinates of the pixels are kept unchanged, and the difference value between the abscissa of the current pixel and the abscissa of the mirror edge is the same as the difference value between the abscissa of the mirror pixel and the abscissa of the mirror edge.

Similarly, when the mirror edge is a lateral edge, the abscissas of the pixels are kept unchanged, and the difference value between the ordinate of the current pixel and the ordinate of the mirror edge is the same as the difference value between the ordinate of the mirror pixel and the ordinate of the mirror edge.

In the technical schemes of this example, after the game server mirrors an interactive image acquired by one of the two co-hosted terminals, the interactive image obtained after the mirror processing is transmitted to the other terminal so that the other terminal combines the interactive images to obtain a target interactive image satisfying the display requirement of the other terminal. For any terminal, a target interactive image satisfying display requirements of multiple terminals may be obtained based on the preceding method. Moreover, the interaction requirement and the display requirement of live streaming co-hosting are both considered, and the accuracy of the target interactive image displayed by the multiple terminals is ensured.

In an embodiment, the game server may send the control signaling to the first terminal and the second terminal synchronously to enable the first terminal and the second terminal to synchronously execute the control signaling. The control signaling includes start signaling, end signaling, and state switch signaling. The preceding control signaling is configured to synchronously control the first terminal and the second terminal at the start, the end, and in the process of the game scenario. In this manner, the synchronization of the scenario is implemented, and the interaction disorder caused by a delay is reduced.

### Example four

In this example, the game interactive scenario is used as an example to describe the image forming method of the interactive region in the method for controlling interactive live streaming co-hosting provided in the preceding embodiments. As shown in FIG. 2C, the control object of the current host and the control object of a co-hosting host are each a baffle, and the interactive object is a ball. The current host may control the baffle corresponding to the current host to move up and down in the display region so that after hitting the baffle corresponding to the current host, the ball bounces back to the display region in which the baffle corresponding to the co-hosting host is located. FIG. 2C merely exemplarily shows that the ball moves horizontally from the display region in which the baffle corresponding to the current host is located to the display region in which the baffle corresponding to the co-hosting host is located. The ball may move in any direction in the game interactive scenario, as long as the bounce law after the ball hits the baffle is conformed.

In this example, the current host controls the up and down movement of the baffle by changing the position of the face, that is, the current host nods down, which represents that the baffle is controlled to move down, while the current host looks up, which represents that the baffle is controlled to move upward. The terminal of the current host identifies the control information in the video image of the current host, and the control information is the ordinate of the face of the current host. The position data of the baffle corresponding to the current host in the display region in the game interactive scenario is determined frame by frame based on the control information. The interactive image for the current host is formed based on the rendering of the position data of the baffle and the position data of the ball. In the interactive image of the current host, the baffle corresponding to the current host is always located on the left side of the interactive image of the current host. Similarly, on the terminal side of the co-hosting host, the interactive image of the co-hosting host is formed by rendering in the same manner as described above. In the interactive image of the co-hosting host, the baffle corresponding to the co-hosting host is always located on the left side of the interactive image of the co-hosting host.

The terminal of the current host combines the interactive image acquired by the terminal of the current host and the mirror image of the interactive image of the co-hosting host to form the image of the interactive region displayed on the terminal of the current host. In this manner, in the image of the interactive region, the baffle corresponding to the current host and the baffle corresponding to the co-hosting host are located on two sides of the image of the interactive region, and the baffle corresponding to the current host is located on the left side of the image of the interactive region, as shown in FIG. 2C. Similarly, an image composed of the interactive image of the co-hosting host and the mirror image of the interactive image of the current host is formed in the interactive region on the terminal side of the co-hosting host. The baffle corresponding to the co-hosting host is located on the left side of the image of the interactive region.

Through the preceding methods, the image in the interactive region is continuously rendered on the terminal of the host, and the image in the interactive region is pushed to the audience terminal in the live streaming room of the host so that the image in the interactive region displayed in the audience terminal is consistent with the image in the interactive region on the terminal of the host.

### Example five

FIG. 6 is a diagram illustrating the structure of an apparatus for controlling interactive live streaming co-hosting according to example five. The apparatus for controlling interactive live streaming co-hosting is integrated in a terminal, such as a mobile terminal or a PC terminal. As shown in FIG. 6, the apparatus includes an interactive image acquisition module 410 and a target interactive image determination module 420.

The interactive image acquisition module 410 is configured to acquire a first interactive image and receive a mirror interactive image of a second terminal. The first terminal is co-hosted with the second terminal. A second interactive image of the second terminal is mirrored to obtain the mirror interactive image of the second terminal. The target interactive image determination module 420 is configured to combine the first interactive image and the mirror interactive image to obtain a target interactive image.

In the technical schemes provided by this example, the interactive image acquisition module acquires the first interactive image and the mirror interactive image respectively. The acquired first interactive image and the received mirror interactive image of the second interactive image of the second terminal are combined based on the target interactive image determination module to obtain the target interactive image suitable for the first terminal to display. In this manner, the clarity and accuracy of the interactive images in the interactive region of different terminals in the live streaming scenario are ensured, and the confusion of interactive images is avoided.

On the basis of the preceding technical schemes, the first interactive image and/or the second interactive image includes at least one interactive object. The interactive object moves in the first interactive image and the second interactive image.

On the basis of the preceding technical schemes, the interactive image acquisition module 410 is configured to acquire the first interactive image in the following manner: control information in a video image of a first user is identified, and data, in the interactive region of the first terminal, of the control object in the interactive scenario is determined frame by frame based on the control information; and the first interactive image corresponding to the interactive region of the first terminal is formed based on the data.

On the basis of the preceding technical schemes, the control object is different from the interactive object, or the control object is one or more of the at least one interactive object.

On the basis of the preceding technical schemes, the apparatus also includes a video stream acquisition module, an initial video merging stream generation module, and a target video merging stream generation module. The video stream acquisition module is configured to acquire the first video stream and receive the second video stream of the second terminal. The initial video merging stream generation module is configured to form the initial video merging stream based on the first video stream and the second video stream. The target video merging stream generation module is configured to add the target interactive image to the initial video merging stream to generate the target video merging stream. The target video merging stream is used to push to an audience terminal of the first terminal.

On the basis of the preceding technical schemes, the initial video merging stream generation module includes a stream merging position unit and a stream merging unit. The stream merging position unit is configured to determine a stream merging position of the first video stream and a stream merging position of the second video stream according to an identifier of the first video stream and an identifier of the second video stream. The stream merging unit is configured to perform stream merging processing on the first video stream and the second video stream according to the stream merging positions to form the initial video merging stream.

On the basis of the preceding technical schemes, the stream merging unit is also configured to perform the stream merging processing on the video frame of the first video stream and the video frame of the second video stream according to the stream merging positions based on timestamps of multiple video frames of the first video stream and timestamps of multiple video frames of the second video stream, where the video frame of the first video stream and the video frame of the second video stream have the same timestamp.

On the basis of the preceding technical schemes, the apparatus also includes a signaling reception execution module. The signaling reception execution module is configured to receive control signaling sent by a game server and adjust a state of the interactive scenario in which the first terminal and the second terminal are located based on the control signaling. The control signaling is sent by the game server synchronously to the first terminal and the second terminal.

On the basis of the preceding technical schemes, the control signaling includes start signaling, end signaling, and state switch signaling.

The apparatus provided by this example may execute the method provided by any embodiment of the present disclosure and has functional modules and beneficial effects corresponding to the method executed.

The multiple units and modules included in the preceding apparatus are just divided according to functional logic but are not limited to such division, as long as the corresponding functions can be implemented. Additionally, the name of each functional unit is just for distinguishing between each other but not to limit the protection scope of the embodiments of the present disclosure.

### Example six

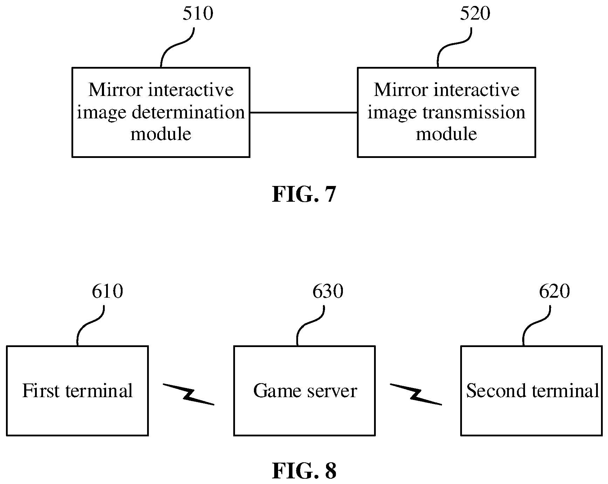

FIG. 7 is a diagram illustrating the structure of an apparatus for controlling interactive live streaming co-hosting according to example six. The apparatus may be integrated in a server. As shown in FIG. 7, the apparatus includes a mirror interactive image determination module 510 and a mirror interactive image transmission module 520.

The mirror interactive image determination module 510 is configured to receive a second interactive image sent by a second terminal and mirror the second interactive image to obtain a mirror interactive image. The mirror interactive image transmission module 520 is configured to transmit the mirror interactive image to a first terminal based on a realtime communication to enable the first terminal to form a target interactive image based on an acquired first interactive image and the mirror interactive image.

In the technical schemes provided by this example, after the mirror interactive image determination module in the game server mirrors the interactive image acquired by one of the two co-hosted terminals, the interactive image obtained after the mirror processing is transmitted to the other terminal based on the mirror interactive image transmission module, so that the other terminal combines interactive images to obtain the target interactive image satisfying the display requirement of the other terminal. For any terminal, the target interactive image satisfying the display requirements of multiple terminals may be obtained based on the preceding method. Moreover, the interaction requirement and the display requirement of live streaming co-hosting are both considered, and the accuracy of the target interactive image displayed by the multiple terminals is ensured.

On the basis of the preceding technical schemes, the mirror interactive image determination module 510 is configured to mirror the second interactive image in the following manner: the second interactive image is mirrored by using a common edge of the second interactive image and the first interactive image as a mirror edge.

On the basis of the preceding technical schemes, the apparatus also includes a control signaling sending module. The control signaling sending module is configured to send the control signaling synchronously to the first terminal and the second terminal to enable the first terminal and the second terminal to synchronously execute the control signaling.

On the basis of the preceding technical schemes, the control signaling includes start signaling, end signaling, and state switch signaling.

The apparatus provided by this example may execute the method provided by any embodiment of the present disclosure and has functional modules and beneficial effects corresponding to the method executed.

The multiple units and modules included in the preceding apparatus are just divided according to functional logic but are not limited to such division, as long as the corresponding functions can be implemented. Additionally, the name of each functional unit is just for distinguishing between each other but not to limit the protection scope of the embodiments of the present disclosure.

### Embodiment seven

FIG. 8 is a diagram illustrating the structure of a system for controlling interactive live streaming co-hosting according to embodiment seven of the present disclosure. The system includes a first terminal 610, a second terminal 620, and a game server 630.

The first terminal 610 acquires a first interactive image and sends the first interactive image to the game server 630. The second terminal 620 acquires a second interactive image and sends the second interactive image to the game server 630. The game server 630 mirrors the first interactive image and the second interactive image separately to obtain a first mirror interactive image and a second mirror interactive image, transmits the first mirror interactive image to the second terminal 620, and transmits the second mirror interactive image to the first terminal 610. The first terminal 610 generates a first target interactive image based on the first interactive image and the second mirror interactive image. The second terminal 620 generates a second target interactive image based on the second interactive image and the first mirror interactive image.

In the technical schemes of this embodiment, after the game server mirrors the interactive image acquired by the first terminal and the interactive image acquired by the second terminal respectively, where the first terminal is co-hosted with the second terminal, the interactive image obtained after the mirror processing is transmitted to the other terminal, so that the other terminal combines interactive images to obtain the target interactive image satisfying the display requirement of the other terminal. The display requirement of the first terminal and the display requirement of the second terminal can be simultaneously satisfied, and the accuracy of the target interactive image displayed by multiple terminals is ensured.

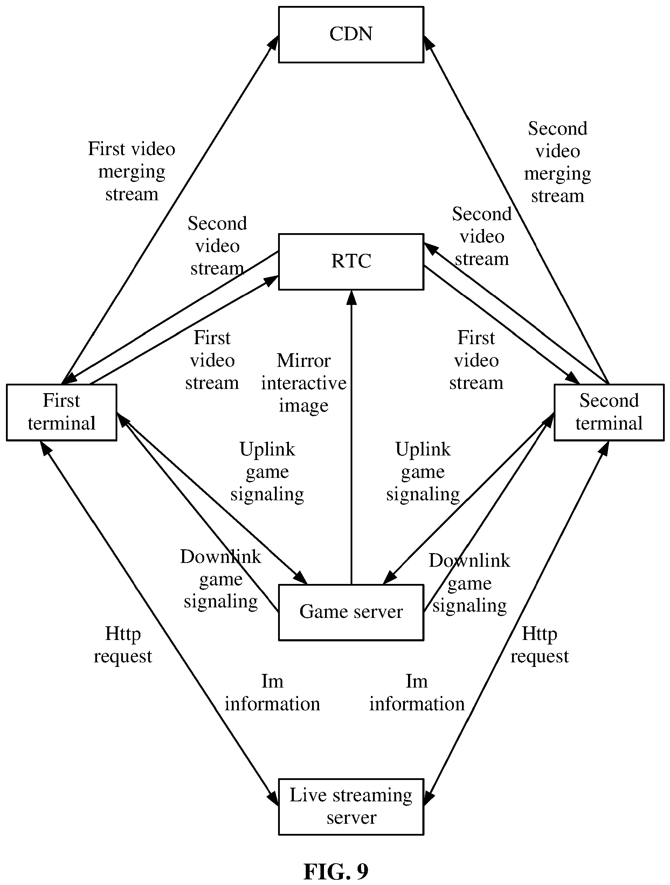

On the basis of the preceding embodiments, the system also includes a realtime communication. The realtime communication is communicatively connected to the first terminal, the second terminal, and the game server. For example, referring to FIG. 9, FIG. 9 is a diagram illustrating the structure of another system for controlling interactive live streaming co-hosting according to embodiment seven of the present disclosure.

The realtime communication is configured to receive the first mirror interactive image and the second mirror interactive image transmitted by the game server, transmit the first mirror interactive image to the second terminal, and transmit the second mirror interactive image to the first terminal.

On the basis of the preceding embodiments, the first terminal acquires a first video stream and transmits the first video stream to the second terminal based on the realtime communication. The second terminal acquires a second video stream and transmits the second video stream to the first terminal based on the realtime communication. An identifier of a target terminal may be respectively provided in the first video stream and the second video stream. The realtime communication may determine a transmission target according to the identifier of the target terminal. The realtime communication transmits the mirror interactive image. In this manner, the transmission speed is high, and the transmission efficiency and synchronization are effectively improved.

The first terminal forms a first video merging stream based on the first video stream, the second video stream, and the first target interactive image. The second terminal forms a second video merging stream based on the first video stream, the second video stream, and the second target interactive image.

The system also includes a content delivery network server communicatively connected to the first terminal and the second terminal. The content delivery network server is configured to receive the first video merging stream transmitted by the first terminal and the second video merging stream transmitted by the second terminal and push the first video merging stream to a corresponding audience terminal and the second video merging stream to a corresponding audience terminal. The first video merging stream and the second video merging stream may be provided with corresponding identifiers, for example, terminal identifiers (IDs). The content delivery network server determines the corresponding audience terminal for pushing according to the identifier in the video merging stream to ensure a correct pushing.

The system also includes a live streaming server communicatively connected to the first terminal and the second terminal. The live streaming server is configured to receive a co-hosting request of the first terminal or a co-hosting request of the second terminal and perform co-hosting matching on the first terminal and the second terminal based on the co-hosting request. The co-hosting request in FIG. 9 may be configured as a hyper text transfer protocol (HTTP) request. The live streaming server is only configured to perform live broadcast co-hosting matching and transmission of live streaming related information, and the live streaming server does not need to perform video stream merging processing. In this manner, the workload of the live streaming server is reduced, and the delay and lag of the live streaming server are avoided. The game server and the live streaming server are independent of each other and do not interwork.

The game server sends the control signaling synchronously to the first terminal and the second terminal to enable the first terminal and the second terminal to synchronously execute the control signaling. In FIG. 9, the control signaling is configured as downlink game signaling. The downlink game signaling may be, but is not limited to, game start signaling, room preparation signaling, display toast signaling, single game ready signaling, single game end signaling, game end signaling, game data signaling, prop scramble start signaling, prop entry/end signaling, a notification information signaling, and so on. Uplink game signaling may be game data signaling transmitted by the first terminal and the second terminal to the game server.

### Embodiment eight

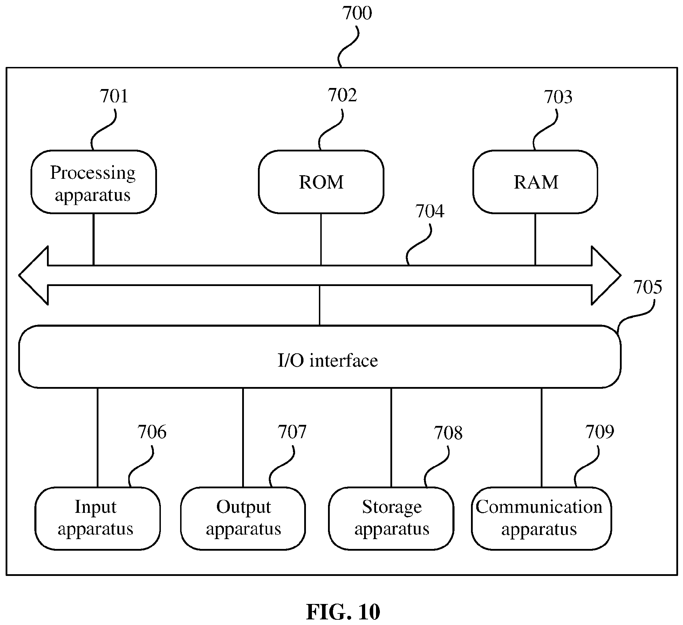

Referring to FIG. 10, FIG. 10 shows a diagram illustrating the structure of an electronic device 700 (such as the terminal device or server in FIG. 10) applicable to implementing the embodiments of the present disclosure. The terminal device in the embodiments of the present disclosure may include, but is not limited to, mobile terminals such as a mobile phone, a laptop, a digital broadcast receiver, a personal data assistant (PDA), a portable Android device (PAD), a portable media player (PMP) and an in-vehicle terminal (such as an in-vehicle navigation terminal), and stationary terminals such as a digital television (TV) and a desktop computer. The electronic device shown in FIG. 10 is merely an example and is not intended to limit the function and usage scope of the embodiments of the present disclosure.

As shown in FIG. 10, the electronic device 700 may include a processing apparatus (such as a central processing unit and a graphics processing unit) 701. The processing apparatus 701 may execute multiple appropriate actions and processing according to a program stored in a read-only memory (ROM) 702 or a program loaded into a random-access memory (RAM) 703 from a storage apparatus 708. The RAM 703 also stores various programs and data required for the operation of the electronic device 700. The processing apparatus 701, the ROM 702, and the RAM 703 are connected to each other through a bus 704. An input/output (I/O) interface 705 is also connected to the bus 704.

Generally, the following apparatuses may be connected to the I/O interface 705: an input apparatus 706 such as a touch screen, a touch pad, a keyboard, a mouse, a camera, a microphone, an accelerometer and a gyroscope; an output apparatus 707 such as a liquid crystal display (LCD), a speaker and a vibrator; the storage apparatus 708 such as a magnetic tape and a hard disk; and a communication apparatus 709. The communication apparatus 709 may allow the electronic device 700 to perform wireless or wired communication with other devices to exchange data. Although FIG. 10 shows the electronic device 700 having various apparatuses, not all the apparatuses shown here need to be implemented or present. Alternatively, more or fewer apparatuses may be implemented or present.

According to embodiments of the present disclosure, the process described above with reference to the flowchart may be implemented as a computer software program. For example, the embodiments of the present disclosure include a computer program product. The computer program product includes a computer program carried in a non-transitory computer-readable medium. The computer program includes program codes for executing the method shown in the flowchart. In such an embodiment, the computer program may be downloaded from a network and installed through the communication apparatus 709, or may be installed from the storage apparatus 708, or may be installed from the ROM 702. When the computer program is executed by the processing apparatus 701, the preceding functions defined in the method of the embodiments of the present disclosure are executed.

The electronic device provided in the embodiment of the present disclosure belongs to the same inventive concept as the method for controlling interactive live streaming co-hosting provided in the preceding embodiments. For the technical details not described in detail in the embodiment, reference may be made to the preceding embodiments, and the embodiment has the same beneficial effects as the preceding embodiments.

### Embodiment nine

An embodiment of the present disclosure provides a computer storage medium storing a computer program. When executing the computer program, a processor performs the method for controlling interactive live streaming co-hosting provided in the preceding embodiments.

The computer-readable medium described above in the present disclosure may be a computer-readable signal medium or a computer-readable storage medium or any combination thereof. The computer-readable storage medium, for example, may be, but is not limited to, an electronic, magnetic, optical, electromagnetic, infrared or semiconductor system, apparatus or device, or any combination thereof. An example of the computer-readable storage medium may include, but is not limited to, an electrical connection having one or more wires, a portable computer magnetic disk, a hard disk, a RAM, a ROM, an erasable programmable read-only memory (EPROM), a flash memory, an optical fiber, a portable compact disc read-only memory (CD-ROM), an optical storage device, a magnetic storage device, or any suitable combination thereof. In the present disclosure, the computer-readable storage medium may be any tangible medium including or storing a program. The program may be used by or used in conjunction with an instruction execution system, apparatus, or device. In the present disclosure, the computer-readable signal medium may include a data signal propagated on a baseband or as a part of a carrier, and computer-readable program codes are carried in the data signal. The data signal propagated in this manner may be in multiple forms and includes, and is not limited to, an electromagnetic signal, an optical signal, or any suitable combination thereof. The computer-readable signal medium may further be any computer-readable medium other than the computer-readable storage medium. The computer-readable signal medium may send, propagate, or transmit a program used by or in conjunction with an instruction execution system, apparatus, or device. The program codes included in the computer-readable medium may be transmitted in any suitable medium, including, but not limited to, a wire, an optical cable, a radio frequency (RF), or any suitable combination thereof.

In some embodiments, clients and servers may communicate using any currently known or future developed network protocol, such as an HTTP, and may be interconnected with any form or medium of digital data communication (such as a communication network). Examples of the communication network include a local area network (LAN), a wide area networks (WAN), an internet (for example, the Internet), a peer-to-peer network (for example, an Ad-Hoc network), and any network currently known or to be developed in the future.

The preceding computer-readable medium may be included in the preceding electronic device or may exist alone without being assembled into the electronic device.

The preceding computer-readable medium carries one or more programs. When the one or more programs are executed by the electronic device, the electronic device executes the steps below.

The first terminal acquires the first interactive image and receives the mirror interactive image of the second terminal. The first terminal is co-hosted with the second terminal. The second interactive image of the second terminal is mirrored to obtain the mirror interactive image of the second terminal. The first terminal combines the first interactive image and the mirror interactive image to obtain the target interactive image.

Computer program codes for performing the operations in the present disclosure may be written in one or more programming languages or combination thereof. The preceding one or more programming languages include, but are not limited to, object-oriented programming languages such as Java, Smalltalk and C++, as well as conventional procedural programming languages such as C or similar programming languages. Program codes may be executed entirely on a user computer, partly on a user computer, as a stand-alone software package, partly on a user computer and partly on a remote computer, or entirely on a remote computer or a server. In the case involving the remote computer, the remote computer may be connected to the user computer through any type of network including a LAN or a WAN, or may be connected to an external computer (for example, via the Internet through an Internet service provider).

The flowcharts and block diagrams in the drawings show possible architectures, functions and operations of the system, method and computer program product according to multiple embodiments of the present disclosure. In this regard, each block in the flowcharts or block diagrams may represent a module, a program segment, or part of codes that contains one or more executable instructions for implementing specified logical functions. It is also to be noted that in some alternative implementations, the functions marked in the blocks may occur in an order different from those marked in the drawings. For example, two successive blocks may, in fact, be executed substantially in parallel or in a reverse order, which depends on the functions involved. It is also to be noted that each block in the block diagrams and/or flowcharts and a combination of blocks in the block diagrams and/or flowcharts may be implemented by a special-purpose hardware-based system which executes specified functions or operations, or a combination of special-purpose hardware and computer instructions.

The units involved in the embodiments of the present disclosure may be implemented by software or hardware. The names of the units/modules do not constitute a limitation on the units themselves in one case. For example, an interactive image acquisition behavior data acquisition module may also be described as an "acquisition module".

The functions described above herein may be executed, at least partially, by one or more hardware logic components. For example, without limitation, exemplary types of hardware logic components that may be used include: a field programmable gate array (FPGA), an application specific integrated circuit (ASIC), application specific standard parts (ASSP), a system-on-a-chip (SoC), a complex programmable logic device (CPLD) and the like.

In the context of the present disclosure, the machine-readable medium may be a tangible medium that may include or store a program that is used by or used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. Examples of the machine-readable storage medium may include an electrical connection based on one or more wires, a portable computer disk, a hard disk, a RAM, a ROM, an EPROM or a flash memory, an optical fiber, a CD-ROM, an optical storage device, a magnetic storage device, or any suitable combination thereof.

## Claims

1. A method for controlling interactive live streaming co-hosting comprises:
acquiring (S110; S210), by a first terminal (610), a first interactive image and receiving a mirror interactive image of a second terminal (620), wherein the first terminal (610) and the second terminal (620) are in a live streaming co-hosting state, the first interactive image is an image of an interactive object in an interactive region of the first terminal (610), the second interactive image is an image of the interactive object in an interactive region of the second terminal (620), and the mirror interactive image of the second terminal (620) is obtained by performing mirror processing on a second interactive image of the second terminal (620); and
combining (S120; S220), by the first terminal (610), the first interactive image and the mirror interactive image to obtain a target interactive image;
wherein the method further comprises:
acquiring (S230), by the first terminal (610), a first video stream, receiving a second video stream of the second terminal (620), and forming an initial video merging stream based on the first video stream and the second video stream; and
adding, by the first terminal (610), the target interactive image to the initial video merging stream to generate a target video merging stream, wherein the target video merging stream is used to push to an audience terminal of the first terminal (610), and each video frame of the target video merging stream comprises an image of an interactive region corresponding to the interactive object and an image of a display region corresponding to a first host of the first terminal (610) and a second host of the second terminal (620).

2. The method according to claim 1, wherein at least one interactive object moves between the first interactive image and the second interactive image.

3. The method according to claim 2, wherein acquiring (S110; S210), by the first terminal (610), the first interactive image comprises:
identifying, by the first terminal (610), control information in a video image of a first user and determining, in an interactive scenario, data of a control object in the interactive region of the first terminal (610) frame by frame based on the control information; and
forming the first interactive image corresponding to the interactive region of the first terminal (610) based on the data;
wherein the control object is different from the at least one interactive object, or the control object is at least one of the at least one interactive object.

4. The method according to claim 1, wherein forming the initial video merging stream based on the first video stream and the second video stream comprises:
determining, according to an identifier of the first video stream and an identifier of the second video stream, a stream merging position of the first video stream and a stream merging position of the second video stream; and
performing, according to the stream merging position of the first video stream and the stream merging position of the second video stream, stream merging processing on the first video stream and the second video stream to form the initial video merging stream.

5. The method according to claim 4, wherein performing, according to the stream merging position of the first video stream and the stream merging position of the second video stream, the stream merging processing on the first video stream and the second video stream comprises:
performing, based on timestamps of a plurality of video frames of the first video stream and timestamps of a plurality of video frames of the second video stream, the stream merging processing on a video frame in the first video stream and a video frame in the second video stream according to the stream merging position of the first video stream and the stream merging position of the second video stream, wherein the video frame in the first video and the video frame in the second video have a same timestamp.

6. The method according to claim 1, further comprising:
receiving, by the first terminal (610), control signaling sent by a game server (630) and adjusting a state of an interactive scenario in which the first terminal (610) and the second terminal (620) are located based on the control signaling, wherein the control signaling is sent by the game server (630) synchronously to the first terminal (610) and the second terminal (620);
wherein the control signaling comprises start signaling, end signaling, and state switch signaling.

7. A system for controlling interactive live streaming co-hosting, comprising a first terminal (610), a second terminal (620), and a game server (630), wherein the first terminal (610) and the second terminal (620) are in a live streaming co-hosting state;
the first terminal (610) is configured to acquire a first interactive image and send the first interactive image to the game server (630), wherein the first interactive image is an image of an interactive object in an interactive region of the first terminal (610);
the second terminal (620) is configured to acquire a second interactive image and send the second interactive image to the game server (630), wherein the second interactive image is an image of the interactive object in an interactive region of the second terminal (620);
the game server (630) is configured to: perform mirror processing on the first interactive image to obtain a first mirror interactive image, perform the mirror processing on the second interactive image to obtain a second mirror interactive image, transmit the first mirror interactive image to the second terminal (620), and transmit the second mirror interactive image to the first terminal (610);
the first terminal (610) is further configured to generate a first target interactive image based on the first interactive image and the second mirror interactive image;
the second terminal (620) is further configured to generate a second target interactive image based on the second interactive image and the first mirror interactive image;
the first terminal (610) is further configured to acquire a first video stream and transmit the first video stream to the second terminal (620);
the second terminal (620) is further configured to acquire a second video stream and transmit the second video stream to the first terminal (610);
the first terminal (610) is further configured to form a first video merging stream based on the first video stream, the second video stream, and the first target interactive image, wherein each video frame of the first video merging stream comprises an image of an interactive region corresponding to the interactive object and an image of a display region corresponding to a first host of the first terminal (610) and a second host of the second terminal (620); and
the second terminal (620) is further configured to form a second video merging stream based on the first video stream, the second video stream, and the second target interactive image, wherein each video frame of the second video merging stream comprises an image of an interactive region corresponding to the interactive object and a display region corresponding to a first host of the first terminal (610) and a second host of the second terminal (620).

8. The system according to claim 7, further comprising a realtime communication communicatively connected to the first terminal (610), the second terminal (620), and the game server (630),
wherein the realtime communication is configured to receive the first mirror interactive image and the second mirror interactive image transmitted by the game server (630), transmit the first mirror interactive image to the second terminal (620), and transmit the second mirror interactive image to the first terminal (610).

9. The system according to claim 7 or 8, further comprising a content delivery network server communicatively connected to the first terminal (610) and the second terminal (620),
wherein the content delivery network server is configured to: receive the first video merging stream transmitted by the first terminal (610) and the second video merging stream transmitted by the second terminal (620), and push the first video merging stream and the second video merging stream respectively to corresponding audience terminals.

10. The system according to any one of claims 7 to 9, wherein the first terminal (610) is configured to acquire the first interactive image in the following manner:
identifying control information in a video image of a first user, and determining, in an interactive scenario, data of a control object in the interactive region of the first terminal (610) frame by frame based on the control information; and
forming the first interactive image corresponding to the interactive region of the first terminal (610) based on the data;
wherein the control object is different from the at least one interactive object, or the control object is at least one of the at least one interactive object.

11. The system according to any one of claims 7 to 10, wherein the first terminal (610) is further configured to form the first video merging stream based on the first video stream, the second video stream, and the first target interactive image in the following manner:
determining, according to an identifier of the first video stream and an identifier of the second video stream, a stream merging position of the first video stream and a stream merging position of the second video stream; and
performing, according to the stream merging position of the first video stream and the stream merging position of the second video stream, stream merging processing on the first video stream and the second video stream to form the first video merging stream.

12. The system according to claim 11, wherein the first terminal (610) is configured to perform, according to the stream merging position of the first video stream and the stream merging position of the second video stream, the stream merging processing on the first video stream and the second video stream in the following manner:
performing, based on timestamps of a plurality of video frames of the first video stream and timestamps of a plurality of video frames of the second video stream, the stream merging processing on a video frame in the first video stream and a video frame in the second video stream according to the stream merging position of the first video stream and the stream merging position of the second video stream, wherein the video frame in the first video and the video frame in the second video have a same timestamp.

13. The system according to any one of claims 7 to 12, wherein the game server (630) is further configured to send control signaling synchronously to the first terminal (610) and the second terminal (620) to enable the first terminal (610) and the second terminal (620) to synchronously execute the control signaling;
wherein the control signaling comprises start signaling, end signaling, and state switch signaling.

14. An electronic device, comprising:
at least one processor; and
a storage apparatus, configured to store at least one program;
wherein the at least one processor, when executing the at least one program, performs the method for controlling interactive live streaming co-hosting according to any one of claims 1 to 6.

15. A storage medium comprising computer-executable instructions, wherein when executing the computer-executable instructions, a computer processor performs the method for controlling interactive live streaming co-hosting according to any one of claims 1 to 6.

## Patentansprüche

1. Verfahren zum Steuern interaktiver Live-Streaming-Co-Hosting, das Folgendes umfasst:
Aufnehmen (S110; S210), durch ein erstes Endgerät (610), eines ersten interaktiven Bilds und Empfangen eines gespiegelten interaktiven Bilds eines zweiten Endgeräts (620), wobei sich das erste Endgerät (610) und das zweite Endgerät (620) in einem Live-Streaming-Co-Hosting-Zustand befinden, das erste interaktive Bild ein Bild eines interaktiven Objekts in einem interaktiven Bereich des ersten Endgeräts (610) ist, das zweite interaktive Bild ein Bild des interaktiven Objekts in einem interaktiven Bereich des zweiten Endgeräts (620) ist und das gespiegelte interaktive Bild des zweiten Endgeräts (620) durch Durchführen von Spiegelungsverarbeitung an einem zweiten interaktiven Bild des zweiten Endgeräts (620) erhalten wird; und
Kombinieren (S120; S220), durch das erste Endgerät (610), des ersten interaktiven Bilds und des interaktiven Spiegelbilds, um ein interaktives Zielbild zu erhalten;
wobei das Verfahren weiter Folgendes umfasst:
Aufnehmen (S230), durch das erste Endgerät (610), eines ersten Videostreams, Empfangen eines zweiten Videostreams des zweiten Endgeräts (620) und Bilden eines ersten Videofusionsstreams basierend auf dem ersten Videostream und dem zweiten Videostream; und
Hinzufügen, durch das erste Endgerät (610), des interaktiven Zielbilds zu dem ursprünglichen Videofusionsstream, um einen Zielvideofusionsstream zu erzeugen, wobei der Zielvideofusionsstream verwendet wird, um an ein Publikumsendgerät des ersten Endgeräts (610) anzustoßen, und jedes Videoframe des Zielvideofusionsstreams ein Bild eines interaktiven Bereichs, der dem interaktiven Objekt entspricht, und ein Bild eines Anzeigebereichs, der einem ersten Host des ersten Endgeräts (610) und einem zweiten Host des zweiten Endgeräts (620) entspricht, umfasst.

2. Verfahren nach Anspruch 1, wobei sich mindestens ein interaktives Objekt zwischen dem ersten interaktiven Bild und dem zweiten interaktiven Bild bewegt.

3. Verfahren nach Anspruch 2, wobei Aufnehmen (S110; S210), durch das erste Endgerät (610), des ersten interaktiven Bilds, Folgendes umfasst:
Identifizieren, durch das erste Endgerät (610), von Steuerinformationen in einem Videobild eines ersten Benutzers und Bestimmen, in einem interaktiven Szenario, von Daten eines Steuerobjekts in dem interaktiven Bereich des ersten Endgeräts (610) Frame für Frame, basierend auf den Steuerinformationen; und
Bilden des ersten interaktiven Bilds entsprechend dem interaktiven Bereich des ersten Endgeräts (610) basierend auf den Daten;
wobei sich das Steuerobjekt von dem mindestens einen interaktiven Objekt unterscheidet oder das Steuerobjekt mindestens eines des mindestens einen interaktiven Objekts ist.

4. Verfahren nach Anspruch 1, wobei Bilden des anfänglichen Videofusionsstreams basierend auf dem ersten Videostream und dem zweiten Videostream Folgendes umfasst:
Bestimmen, gemäß einer Kennung des ersten Videostreams und einer Kennung des zweiten Videostreams, einer Streamfusionsposition des ersten Videostreams und einer Streamfusionsposition des zweiten Videostreams; und
Durchführen, gemäß der Streamfusionsposition des ersten Videostreams und der Streamfusionsposition des zweiten Videostreams, von Streamfusionsverarbeitung an dem ersten Videostream und dem zweiten Videostream, um den anfänglichen Videofusionsstream zu bilden.

5. Verfahren nach Anspruch 4, wobei Durchführen, gemäß der Streamfusionsposition des ersten Videostreams und der Streamfusionsposition des zweiten Videostreams, der Streamfusionsverarbeitung an dem ersten Videostream und dem zweiten Videostream Folgendes umfasst:
Durchführen, basierend auf Zeitstempeln einer Vielzahl von Videoframes des ersten Videostreams und Zeitstempeln einer Vielzahl von Videoframes des zweiten Videostreams, der Streamfusionsverarbeitung an einem Videoframe im ersten Videostream und einem Videoframe im zweiten Videostream gemäß der Streamfusionsposition des ersten Videostreams und der Streamfusionsposition des zweiten Videostreams, wobei das Videoframe im ersten Video und das Videoframe im zweiten Video einen selben Zeitstempel aufweisen.

6. Verfahren nach Anspruch 1, weiter umfassend:
Empfangen, durch das erste Endgerät (610), von Steuersignalen, die von einem Spielserver (630) gesendet werden, und Anpassen eines Zustands eines interaktiven Szenarios, in dem sich das erste Endgerät (610) und das zweite Endgerät (620) befinden, basierend auf den Steuersignalen, wobei die Steuersignale vom Spielserver (630) synchron an das erste Endgerät (610) und das zweite Endgerät (620) gesendet werden;
wobei die Steuersignale Startsignale, Endsignale und Zustandswechselsignale umfassen.

7. System zum Steuern von interaktivem Live-Streaming-Co-Hosting, umfassend ein erstes Endgerät (610), ein zweites Endgerät (620) und einen Spielserver (630), wobei sich das erste Endgerät (610) und das zweite Endgerät (620) in einem Live-Streaming-Co-Hosting-Zustand befinden;
das erste Endgerät (610) so konfiguriert ist, dass es ein erstes interaktives Bild aufnimmt und das erste interaktive Bild an den Spielserver (630) sendet, wobei das erste interaktive Bild ein Bild eines interaktiven Objekts in einem interaktiven Bereich des ersten Endgeräts (610) ist;
das zweite Endgerät (620) so konfiguriert ist, dass es ein zweites interaktives Bild aufnimmt und das zweite interaktive Bild an den Spielserver (630) sendet, wobei das zweite interaktive Bild ein Bild des interaktiven Objekts in einem interaktiven Bereich des zweiten Endgeräts (620) ist;
der Spielserver (630) konfiguriert ist zum: Durchführen einer Spiegelungsverarbeitung an dem ersten interaktiven Bild, um ein erstes interaktives Spiegelbild zu erhalten, Durchführen der Spiegelungsverarbeitung an dem zweiten interaktiven Bild, um ein zweites interaktives Spiegelbild zu erhalten, Übertragen des ersten interaktiven Spiegelbilds an das zweite Endgerät (620) und Übertragen des zweiten interaktiven Spiegelbilds an das erste Endgerät (610);
das erste Endgerät (610) weiter so konfiguriert ist, dass es ein erstes interaktives Zielbild basierend auf dem ersten interaktiven Bild und dem zweiten Spiegelbild erzeugt;
das zweite Endgerät (620) weiter so konfiguriert ist, dass es ein zweites interaktives Zielbild basierend auf dem zweiten interaktiven Bild und dem ersten Spiegelbild erzeugt;
das erste Endgerät (610) weiter so konfiguriert ist, dass es einen ersten Videostream aufnimmt und den ersten Videostream an das zweite Endgerät (620) überträgt;
das zweite Endgerät (620) weiter so konfiguriert ist, dass es einen zweiten Videostream aufnimmt und den zweiten Videostream an das erste Endgerät (610) überträgt;
das erste Endgerät (610) weiter so konfiguriert ist, dass es einen ersten Videofusionsstream basierend auf dem ersten Videostream und dem ersten interaktiven Zielbild bildet, wobei jedes Videoframe des ersten Videofusionsstreams ein Bild eines interaktiven Bereichs, der dem interaktiven Objekt entspricht, und ein Bild eines Anzeigebereichs, der einem ersten Host des ersten Endgeräts (610) und einem zweiten Host des zweiten Endgeräts (620) entspricht, umfasst; und
das zweite Endgerät (620) weiter so konfiguriert ist, dass es einen zweiten Videofusionsstream basierend auf dem ersten Videostream und dem zweiten interaktiven Zielbild bildet, wobei jedes Videoframe des zweiten Videofusionsstreams ein Bild eines interaktiven Bereichs, der dem interaktiven Objekt entspricht, und einen Anzeigebereich, der einem ersten Host des ersten Endgeräts (610) und einem zweiten Host des zweiten Endgeräts (620) entspricht, umfasst.

8. System nach Anspruch 7, weiter umfassend eine Echtzeitkommunikation, die mit dem ersten Endgerät (610), dem zweiten Endgerät (620) und dem Spielserver (630) kommunikativ verbunden ist,
wobei die Echtzeitkommunikation so konfiguriert ist, dass sie das erste interaktive Spiegelbild und das zweite interaktive Spiegelbild empfängt, die vom Spielserver (630) übertragen werden, das erste interaktive Spiegelbild an das zweite Endgerät (620) überträgt und das zweite interaktive Spiegelbild an das erste Endgerät (610) überträgt.

9. System nach Anspruch 7 oder 8, weiter umfassend einen Content-Delivery-Network-Server, der mit dem ersten Endgerät (610) und dem zweiten Endgerät (620) kommunikativ verbunden ist,
wobei der Content-Delivery-Network-Server konfiguriert ist zum: Empfangen des vom ersten Endgerät (610) übertragenen ersten Videofusionsstream und des vom zweiten Endgerät (620) übertragenen zweiten Videofusionsstreams und Anstoßen des ersten Videofusionsstreams bzw. des zweiten Videofusionsstreams an entsprechende Zuseherendgeräte.

10. System nach einem der Ansprüche 7 bis 9, wobei das erste Endgerät (610) so konfiguriert ist, dass es das erste interaktive Bild auf folgende Weise aufnimmt:
Identifizieren von Steuerinformationen in einem Videobild eines ersten Benutzers und Bestimmen, in einem interaktiven Szenario, von Daten eines Steuerobjekts in dem interaktiven Bereich des ersten Endgeräts (610) Frame für Frame, basierend auf den Steuerinformationen; und
Bilden des ersten interaktiven Bilds entsprechend dem interaktiven Bereich des ersten Endgeräts (610) basierend auf den Daten;
wobei sich das Steuerobjekt von dem mindestens einen interaktiven Objekt unterscheidet oder das Steuerobjekt mindestens eines des mindestens einen interaktiven Objekts ist.

11. System nach einem der Ansprüche 7 bis 10, wobei das erste Endgerät (610) weiter so konfiguriert ist, dass es den ersten Videofusionsstream basierend auf dem ersten Videostream, dem zweiten Videostream und dem ersten interaktiven Zielbild auf folgende Weise bildet:
Bestimmen, gemäß einer Kennung des ersten Videostreams und einer Kennung des zweiten Videostreams, einer Streamfusionsposition des ersten Videostreams und einer Streamfusionsposition des zweiten Videostreams; und
Durchführen, gemäß der Streamfusionsposition des ersten Videostreams und der Streamfusionsposition des zweiten Videostreams, von Streamfusionsverarbeitung an dem ersten Videostream und dem zweiten Videostream, um den ersten Videofusionsstream zu bilden.

12. System nach Anspruch 11, wobei das erste Endgerät (610) so konfiguriert ist, dass es gemäß der Streamfusionsposition des ersten Videostreams und der Streamfusionsposition des zweiten Videostreams die Streamfusionsverarbeitung an dem ersten Videostream und dem zweiten Videostream auf folgende Weise durchführt:
Durchführen, basierend auf Zeitstempeln einer Vielzahl von Videoframes des ersten Videostreams und Zeitstempeln einer Vielzahl von Videoframes des zweiten Videostreams, der Streamfusionsverarbeitung an einem Videoframe im ersten Videostream und einem Videoframe im zweiten Videostream gemäß der Streamfusionsposition des ersten Videostreams und der Streamfusionsposition des zweiten Videostreams, wobei das Videoframe im ersten Video und das Videoframe im zweiten Video einen selben Zeitstempel aufweisen.

13. System nach einem der Ansprüche 7 bis 12, wobei der Spielserver (630) weiter so konfiguriert ist, dass er synchron Steuersignale an das erste Endgerät (610) und das zweite Endgerät (620) sendet, um dem ersten Endgerät (610) und dem zweiten Endgerät (620) zu ermöglichen, die Steuersignale synchron auszuführen;
wobei die Steuersignale Startsignale, Endsignale und Zustandswechselsignale umfassen.

14. Elektronische Vorrichtung, umfassend:
mindestens einen Prozessor; und
eine Speichereinrichtung, die so konfiguriert ist, dass sie mindestens ein Programm speichert;
wobei der mindestens eine Prozessor, wenn er das mindestens eine Programm ausführt, das Verfahren zum Steuern eines interaktiven Live-Streaming-Co-Hostings nach einem der Ansprüche 1 bis 6 durchführt.

15. Speichermedium, das computerausführbare Anweisungen umfasst, wobei, wenn die computerausführbaren Anweisungen ausgeführt werden, ein Computerprozessor das Verfahren zum Steuern eines interaktiven Live-Streaming-Co-Hostings nach einem der Ansprüche 1 bis 6 durchführt.

## Revendications

1. Procédé de commande de co-hébergement de diffusion en continu en direct interactive comprend :
l'acquisition (S110 ; S210), par un premier terminal (610), d'une première image interactive et la réception d'une image interactive miroir d'un second terminal (620), dans lequel le premier terminal (610) et le second terminal (620) sont en état de co-hébergement de diffusion en continu en direct, la première image interactive est une image d'un objet interactif dans une région interactive du premier terminal (610), la seconde image interactive est une image de l'objet interactif dans une région interactive du second terminal (620), et l'image interactive miroir du second terminal (620) est obtenue en effectuant un traitement miroir sur une seconde image interactive du second terminal (620) ; et
la combinaison (S120 ; S220), par le premier terminal (610), de la première image interactive et de l'image interactive miroir pour obtenir une image interactive cible ;
dans lequel le procédé comprend en outre :
l'acquisition (S230), par le premier terminal (610), d'un premier flux vidéo, la réception d'un second flux vidéo du second terminal (620), et la formation d'un flux de fusion vidéo initial sur la base du premier flux vidéo et du second flux vidéo ; et
l'ajout, par le premier terminal (610), de l'image interactive cible au flux de fusion vidéo initial pour générer un flux de fusion vidéo cible, dans lequel le flux de fusion vidéo cible est utilisé pour pousser vers un terminal d'audience du premier terminal (610), et chaque trame vidéo du flux de fusion vidéo cible comprend une image d'une région interactive correspondant à l'objet interactif et une image d'une région d'affichage correspondant à un premier hôte du premier terminal (610) et à un second hôte du second terminal (620).

2. Procédé selon la revendication 1, dans lequel au moins un objet interactif se déplace entre la première image interactive et la seconde image interactive.

3. Procédé selon la revendication 2, dans lequel l'acquisition (S110 ; S210), par le premier terminal (610), de la première image interactive comprend :
l'identification, par le premier terminal (610), des informations de commande dans une image vidéo d'un premier utilisateur et la détermination, dans un scénario interactif, des données d'un objet de commande dans la région interactive du premier terminal (610) trame par trame sur la base des informations de commande ; et
la formation de la première image interactive correspondant à la région interactive du premier terminal (610) sur la base des données ;
dans lequel l'objet de commande est différent de l'au moins un objet interactif, ou l'objet de commande est au moins un du au moins un objet interactif.

4. Procédé selon la revendication 1, dans lequel la formation du flux de fusion vidéo initial à partir du premier flux vidéo et du second flux vidéo comprend :
la détermination, en fonction d'un identifiant du premier flux vidéo et d'un identifiant du second flux vidéo, d'une position de fusion de flux du premier flux vidéo et d'une position de fusion de flux du second flux vidéo ; et
la réalisation, en fonction de la position de fusion de flux du premier flux vidéo et de la position de fusion de flux du second flux vidéo, d'un traitement de fusion de flux sur le premier flux vidéo et le second flux vidéo afin de former le flux de fusion vidéo initial.

5. Procédé selon la revendication 4, dans lequel la réalisation, en fonction de la position de fusion de flux du premier flux vidéo et de la position de fusion de flux du second flux vidéo, d'un traitement de fusion de flux sur le premier flux vidéo et le second flux vidéo comprend :
la réalisation, sur la base d'horodatages d'une pluralité de trames vidéo du premier flux vidéo et d'horodatages d'une pluralité de trames vidéo du second flux vidéo, du traitement de fusion de flux sur une trame vidéo du premier flux vidéo et une trame vidéo du second flux vidéo en fonction de la position de fusion de flux du premier flux vidéo et de la position de fusion de flux du second flux vidéo, dans lequel la trame vidéo de la première vidéo et la trame vidéo de la seconde vidéo présentent le même horodatage.

6. Procédé selon la revendication 1, comprenant en outre :
la réception, par le premier terminal (610), d'une signalisation de commande envoyée par un serveur de jeu (630) et l'ajustement d'un état d'un scénario interactif dans lequel le premier terminal (610) et le second terminal (620) sont situés sur la base de la signalisation de commande, dans lequel la signalisation de commande est envoyée par le serveur de jeu (630) de manière synchrone au premier terminal (610) et au second terminal (620) ;
dans lequel la signalisation de commande comprend la signalisation de début, la signalisation de fin et la signalisation de commutation d'état.

7. Système de commande de co-hébergement de diffusion en continu en direct interactive, comprenant un premier terminal (610), un second terminal (620) et un serveur de jeu (630), dans lequel le premier terminal (610) et le second terminal (620) sont dans un état de co-hébergement de diffusion en continu en direct ;
le premier terminal (610) est configuré pour acquérir une première image interactive et envoyer la première image interactive au serveur de jeu (630), dans lequel la première image interactive est une image d'un objet interactif dans une région interactive du premier terminal (610) ;
le second terminal (620) est configuré pour acquérir une seconde image interactive et envoyer la seconde image interactive au serveur de jeu (630), dans lequel la seconde image interactive est une image de l'objet interactif dans une région interactive du second terminal (620) ;
le serveur de jeu (630) est configuré pour : effectuer un traitement miroir sur la première image interactive pour obtenir une première image interactive miroir, effectuer le traitement miroir sur la seconde image interactive pour obtenir une seconde image interactive miroir, transmettre la première image interactive miroir au second terminal (620) et transmettre la seconde image interactive miroir au premier terminal (610) ;
le premier terminal (610) est en outre configuré pour générer une première image interactive cible sur la base de la première image interactive et de la seconde image interactive miroir ;
le second terminal (620) est en outre configuré pour générer une seconde image interactive cible sur la base de la seconde image interactive et de la première image interactive miroir ;
le premier terminal (610) est en outre configuré pour acquérir un premier flux vidéo et transmettre le premier flux vidéo au second terminal (620) ;
le second terminal (620) est en outre configuré pour acquérir un second flux vidéo et transmettre le second flux vidéo au premier terminal (610) ;
le premier terminal (610) est en outre configuré pour former un premier flux de fusion vidéo sur la base du premier flux vidéo, du second flux vidéo et de la première image interactive cible, dans lequel chaque trame vidéo du premier flux de fusion vidéo comprend une image d'une région interactive correspondant à l'objet interactif et une image d'une région d'affichage correspondant à un premier hôte du premier terminal (610) et à un second hôte du second terminal (620) ; et
le second terminal (620) est en outre configuré pour former un second flux de fusion vidéo sur la base du premier flux vidéo, du second flux vidéo et de la seconde image interactive cible, dans lequel chaque trame vidéo du second flux de fusion vidéo comprend une image d'une région interactive correspondant à l'objet interactif et une région d'affichage correspondant à un premier hôte du premier terminal (610) et à un second hôte du second terminal (620).

8. Système selon la revendication 7, comprenant en outre une communication en temps réel connectée de manière communicative au premier terminal (610), au second terminal (620) et au serveur de jeu (630),
dans lequel la communication en temps réel est configurée pour recevoir la première image interactive miroir et la seconde image interactive miroir transmises par le serveur de jeu (630), transmettre la première image interactive miroir au second terminal (620) et transmettre la seconde image interactive miroir au premier terminal (610).

9. Système selon la revendication 7 ou 8, comprenant en outre un serveur de réseau de distribution de contenu connecté de manière communicative au premier terminal (610) et au second terminal (620),
dans lequel le serveur de réseau de distribution de contenu est configuré pour : recevoir le premier flux de fusion vidéo transmis par le premier terminal (610) et le second flux de fusion vidéo transmis par le second terminal (620), et pousser respectivement le premier flux de fusion vidéo et le second flux de fusion vidéo aux terminaux d'audience correspondants.

10. Système selon l'une quelconque des revendications 7 à 9, dans lequel le premier terminal (610) est configuré pour acquérir la première image interactive de la manière suivante :
identifier des informations de commande dans une image vidéo d'un premier utilisateur et déterminer, dans un scénario interactif, les données d'un objet de commande dans la région interactive du premier terminal (610) trame par trame sur la base des informations de commande ; et
former la première image interactive correspondant à la région interactive du premier terminal (610) sur la base des données ;
dans lequel l'objet de commande est différent d'au moins un objet interactif, ou l'objet de commande est au moins un du au moins un objet interactif.

11. Système selon l'une quelconque des revendications 7 à 10, dans lequel le premier terminal (610) est en outre configuré pour former le premier flux de fusion vidéo basé sur le premier flux vidéo, le second flux vidéo et la première image interactive cible de la manière suivante :
déterminer, en fonction d'un identifiant du premier flux vidéo et d'un identifiant du second flux vidéo, une position de fusion de flux du premier flux vidéo et une position de fusion de flux du second flux vidéo ; et
effectuer, en fonction de la position de fusion de flux du premier flux vidéo et de la position de fusion de flux du second flux vidéo, un traitement de fusion de flux sur le premier flux vidéo et le second flux vidéo afin de former le premier flux de fusion vidéo.

12. Système selon la revendication 11, dans lequel le premier terminal (610) est configuré pour effectuer, en fonction de la position de fusion de flux du premier flux vidéo et de la position de fusion de flux du second flux vidéo, un traitement de fusion de flux sur le premier flux vidéo et le second flux vidéo de la manière suivante :
effectuer, sur la base d'horodatages d'une pluralité de trames vidéo du premier flux vidéo et d'horodatages d'une pluralité de trames vidéo du second flux vidéo, le traitement de fusion de flux sur une trame vidéo du premier flux vidéo et une trame vidéo du second flux vidéo en fonction de la position de fusion de flux du premier flux vidéo et de la position de fusion de flux du second flux vidéo, dans lequel la trame vidéo de la première vidéo et la trame vidéo de la seconde vidéo présentent le même horodatage.

13. Système selon l'une quelconque des revendications 7 à 12, dans lequel le serveur de jeu (630) est en outre configuré pour envoyer une signalisation de commande de manière synchrone au premier terminal (610) et au second terminal (620) afin de permettre au premier terminal (610) et au second terminal (620) d'exécuter de manière synchrone la signalisation de commande ;
dans lequel la signalisation de commande comprend la signalisation de début, la signalisation de fin et la signalisation de commutation d'état.

14. Dispositif électronique, comprenant :
au moins un processeur ; et
un appareil de stockage, configuré pour stocker au moins un programme ;
dans lequel, le au moins un processeur, lorsqu'il exécute le au moins un programme, réalise le procédé de commande de co-hébergement de diffusion en continu en direct interactive selon l'une quelconque des revendications 1 à 6.

15. Support de stockage contenant des instructions exécutables par ordinateur, dans lequel lors de l'exécution des instructions exécutables par ordinateur, un processeur d'ordinateur réalise le procédé de commande de co-hébergement de diffusion en continu en direct selon l'une quelconque des revendications 1 à 6.
